# EUROPEAN PATENT APPLICATION

(11) **EP 1 292 156 A1**
(43) Date of publication of application: **12.03.2003**
(21) Application number: 01307681.5
(22) Date of filing: 10.09.2001
(51) Int. Cl.: H04N 9/31

(54) **Triple-lens type projection display with uniform optical path lengths for different color components**

(71) Applicant: Prokia Technology Co., Ltd., Tainan Hsien (TW)
(72) Inventor: Kuo-tung, Tiao, Tsun, Hsin-Chu City (TW); Fu-Ming, Chuang, Chu-Tung Chen, Hsin-Chu Hsien (TW); Sheng-Hsiung, Chan, Chu-Tung Chen, Hsin-Chu Hsien (TW)
(74) Representative: Belcher, Simon James

(57) **Abstract**

A triple-lens type projection display (2) includes a source (21) for generating a white primary beam output, a first beam splitter (251) for splitting the white primary beam output into a first color component and a secondary beam output, a second beam splitter (252) for splitting the secondary beam output into a second color component and a third color component, first, second and third light modulators (271, 272, 273) for modulating the first, second and third color components, respectively, a first projection lens (281) for receiving the first color component from the first light modulator (271), a second projection lens (282) for receiving the second color component from the second light modulator (272), and a third projection lens (283) for receiving the third color component from the third light modulator (273). Each of the first, second and third color components has a respective optical path length that is measured from the first beam splitter (251) to a respective one of the first, second and third light modulators (271, 272, 273). The optical path lengths of the first, second and third color components are equal.

## Description

The invention relates to a projection display, more particularly to a triple-lens type projection display with uniform optical path lengths for different color components.

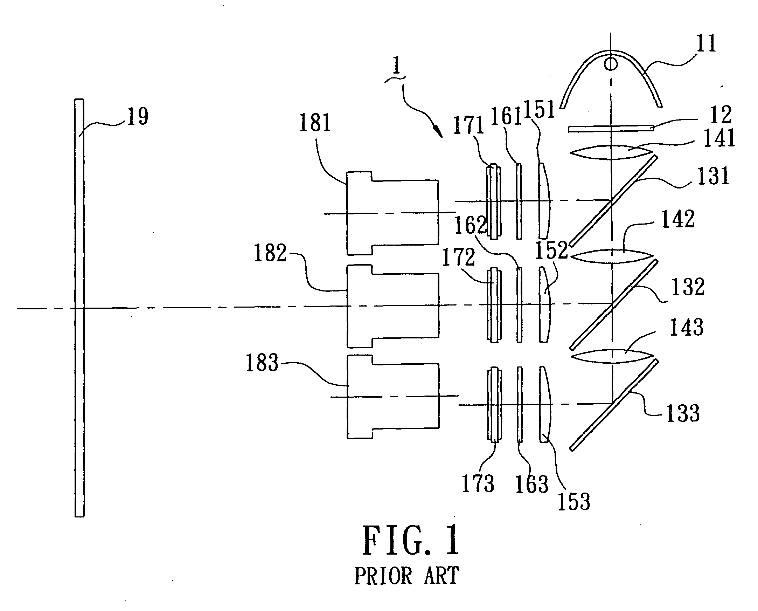

Referring to Figure 1, a conventional triple-lens type projection display 1 is shown to comprise a light source 11, a light filter 12 downstream of the light source 11 for removing ultraviolet rays and infrared rays from a light beam generated by the light source 11 to thereby obtain a white primary beam output, a first expansive lens 141 downstream of the light filter 12, a first beam splitter 131 downstream of the first expansive lens 141 to split the primary beam output from the first expansive lens 141 into a first color component and a secondary beam output, a second expansive lens 142 downstream of the first beam splitter 131, a second beam splitter 132 downstream of the second expansive lens 142 to split the secondary beam output from the second expansive lens 142 into second and third color components, and a third expansive lens 143 downstream of the second beam splitter 132. The first, second and third color components are generally primary color components, such as red, green and blue. The first color component from the first beam splitter 131 passes sequentially through a first focusing lens 151, a first polarizer 161, and a light-modulated first light valve 171 before being received by a first projection lens 181. The second color component from the second beam splitter 132 passes sequentially through a second focusing lens 152, a second polarizer 162, and a light-modulated second light valve 172 before being received by a second projection lens 182. The third color component from the third expansive lens 143 is reflected by a mirror 133 so as to pass sequentially through a third focusing lens 153, a third polarizer 163, and a light-modulated third light valve 173 before being received by a third projection lens 183. The first, second and third projection lenses 181, 182, 183 are disposed on a common plane, and project light onto a display screen 19 for showing an image on the latter.

It is noted that, while the distances of the first, second and third projection lenses 181, 182, 183 from the respective one of the first and second beam splitters 131, 132 and the mirror 133 are equal, the distance of the second beam splitter 132 from the light source 11 is longer than that of the first beam splitter 131, and that the distance of the mirror 133 from the light source is longer than that of the second beam splitter 132. There is thus a need to install the expansive lenses 141, 142, 143 to compensate for the differences in the optical path lengths traveled by the different color components.

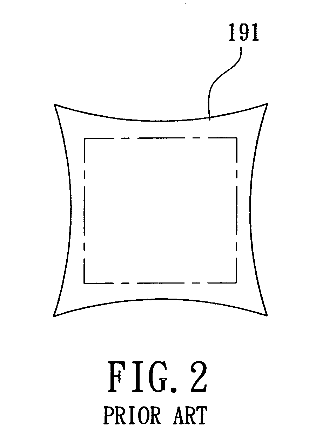

However, because three expansive lenses 141, 142, 143 are needed for the three focusing lenses 151, 152, 153, the conventional projection display 1 involves a relatively large number of essential components. In addition, the expansive lenses 141, 142, 143 can introduce edge distortion to the image 191 shown on the plane of the light valves, as shown in Figure 2.

Therefore, the main object of the present invention is to provide a triple-lens type projection display with uniform optical path lengths for different color components, thereby eliminating the need for expansive lenses as required in the aforesaid prior art.

According to this invention, a triple-lens type projection display comprises:
a source for generating a white primary beam output;
a first beam splitter for splitting the white primary beam output into a first color component and a secondary beam output;
a second beam splitter for splitting the secondary beam output into a second color component and a third color component;
first, second and third light modulators for modulating the first, second and third color components, respectively;
a first projection lens for receiving the first color component from the first light modulator;
a second projection lens for receiving the second color component from the second light modulator; and
a third projection lens for receiving the third color component from the third light modulator.

Each of the first, second and third color components has a respective optical path length that is measured from the first beam splitter to a respective one of the first, second and third light modulators. The optical path lengths of the first, second and third color components are equal.

Other features and advantages of the present invention will become apparent in the following detailed description of the preferred embodiments with reference to the accompanying drawings, of which:
Figure 1 illustrates a conventional triple-lens type projection display;
Figure 2 illustrates a distorted image on the light valves, generated by the expansive lenses, and shown on the projection display of Figure 1;
Figure 3 is a perspective view of the first preferred embodiment of a triple-lens type projection display according to this invention;
Figure 4 is a schematic top view of the first preferred embodiment;
Figure 5 is a schematic side view of the first preferred embodiment;
Figure 6 is a perspective view of the second preferred embodiment of a triple-lens type projection display according to this invention;
Figure 7 is a schematic top view of the second preferred embodiment;
Figure 8 illustrates a light valve, a polarization beam splitter and a projection lens of the second preferred embodiment;
Figure 9 is a schematic top view of the third preferred embodiment of a triple-lens type projection display according to this invention;
Figure 10 is a schematic top view of the fourth preferred embodiment of a triple-lens type projection display according to this invention;
Figure 11 illustrates a light valve and a projection lens of the fourth preferred embodiment;
Figure 12 is a schematic top view of the fifth preferred embodiment of a triple-lens type projection display according to this invention; and
Figure 13 illustrates a light valve and a projection lens of the sixth preferred embodiment of a triple-lens type projection display according to this invention.

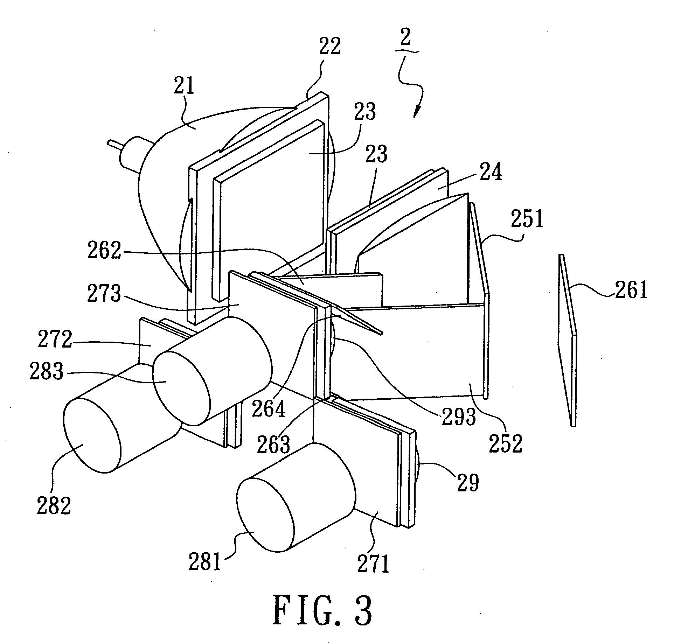

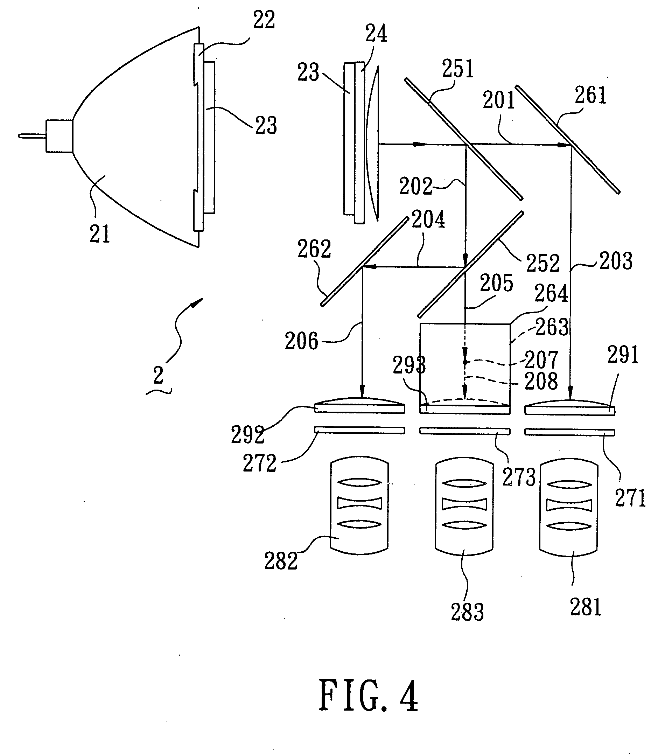

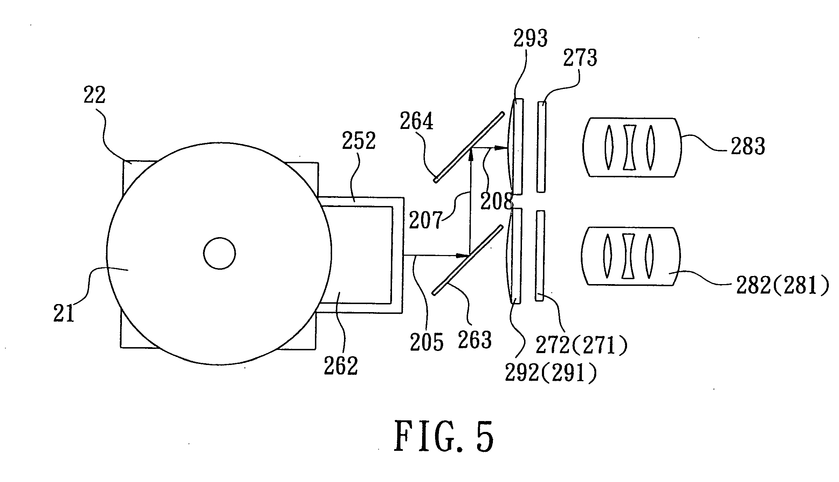

Referring to Figures 3, 4 and 5, the first preferred embodiment of a triple-lens type projection display 2 according to this invention is shown to comprise a light source 21, a light filter 22 downstream of the light source 21 for removing ultraviolet rays and infrared rays from a light beam generated by the light source 21 to thereby obtain a white primary beam output, an integrated lens set including a pair of spaced apart integrated lenses 23 downstream of the light filter 22 to ensure uniformity of the primary beam output, a polarizing or P/S converter 24 downstream of the integrated lens set 23, a first beam splitter 251 downstream of the P/S converter 24 to split the primary beam output from the P/S converter 24 into a first color component that travels along a first optical path 201 and a secondary beam output that travels along a second optical path 202 transverse to the first optical path 201, a first mirror 261 to direct the first color component along the first optical path 201 to travel along a third optical path 203 that is parallel to the second optical path 202, a second beam splitter 252 to split the secondary beam output along the second optical path 202 into a second color component that travels along a fourth optical path 204 transverse to the second optical path 202 and in a direction opposite to the first optical path 201 and into a third color component that travels along a fifth optical path 205 parallel to the second optical path 202, a second mirror 262 to direct the second color component along the fourth optical path 204 to travel along a sixth optical path 206 that is parallel to the second optical path 202, a third mirror 263 to direct the third color component along the fifth optical path 205 to travel along a seventh optical path 207 that is transverse to both the first and second optical paths 201, 202, and a fourth mirror 264 downstream of the third mirror 263 to direct the third color component along the seventh optical path 207 to travel along an eighth optical path 208 that is parallel to the fifth optical path 205. The third, sixth and eighth optical paths 203, 206, 208 are transverse to a common vertical plane, and form three vertices of an imaginary triangle on the common vertical plane. The third and sixth optical paths 203, 206 further traverse a horizontal line on the common vertical plane.

The first, second and third color components are generally primary color components, such as red, green and blue. The first color component along the third optical path 203 passes sequentially through a first focusing lens 291 and a light-modulated first light valve 271 before being received by a first projection lens 281. The second color component along the sixth optical path 206 passes sequentially through a second focusing lens 292 and a light-modulated second light valve 272 before being received by a second projection lens 282. The third color component along the eighth optical path 208 passes sequentially through a third focusing lens 293 and a light-modulated third light valve 273 before being received by a third projection lens 283. The first, second and third light valves 271, 272, 273 are thus disposed on the common vertical plane traversed by the third, sixth and eighth optical paths 203, 206, 208.

The first, second and third light valves 271, 272, 273 are transmissive liquid crystal light valves. As is known in the art, the first, second and third projection lenses 281, 282, 283 project light onto a display screen (not shown) for showing an image on the latter.

In the preferred embodiment, the first, fourth and seventh optical paths 201, 204, 207 have equal path lengths (P1=P4=P7). The third optical path 203 has a path length (P3) equal to the sum of the path lengths (P2, P6) of the second and sixth optical paths 202, 206. The path length (P6) of the sixth optical path 206 is equal to the sum of the path lengths (P5, P8) of the fifth and eighth optical paths 205, 208.

Thus, the path length for the first color component, measured from the first beam splitter 251 to the first focusing lens 291, is equal to P1+P3=P1+P2+P6=P4+P2+P6. The path length for the second color component, measured from the first beam splitter 251 to the second focusing lens 292, is equal to P2+P4+P6. The path length for the third color component, measured from the first beam splitter 251 to the third focusing lens 293, is equal to P2+P5+P7+P8=P2+P4+P6.

In view of the uniform path lengths for the different color components, there is no need to use the expansive lenses as required in the aforesaid conventional projection display 1, thereby eliminating the edge distortion effect that is introduced to the image shown on the plane of the light valves.

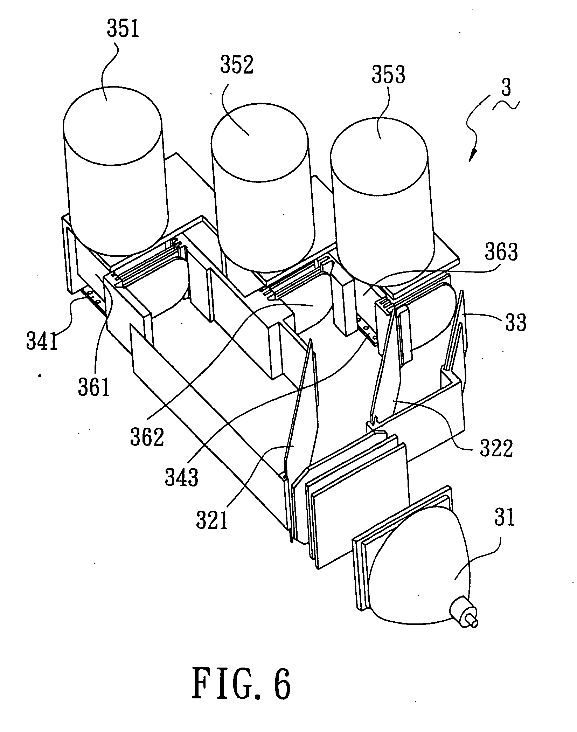

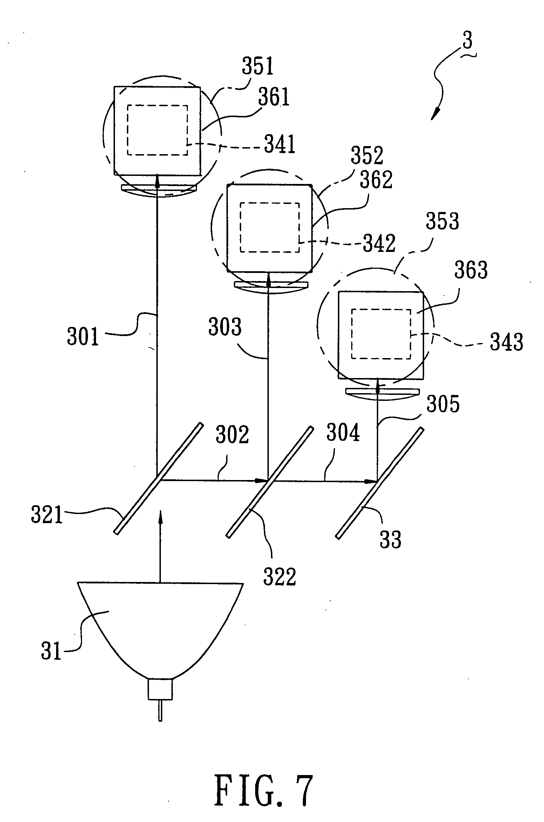

Referring to Figures 6, 7 and 8, the second preferred embodiment of a triple-lens type projection display 3 according to this invention is shown to comprise a light source 31, a light filter (not shown) downstream of the light source 31 for removing ultraviolet rays and infrared rays from a light beam generated by the light source 31 to thereby obtain a white primary beam output, an integrated lens set including a pair of spaced apart integrated lenses (not shown) downstream of the light filter to ensure uniformity of the primary beam output, a polarizing or P/S converter (not shown) downstream of the integrated lens set, a first beam splitter 321 downstream of the P/S converter to split the primary beam output from the P/S converter into a first color component that travels along a first optical path 301 and a secondary beam output that travels along a second optical path 302 transverse to the first optical path 301, a second beam splitter 322 to split the secondary beam output along the second optical path 302 into a second color component that travels along a third optical path 303 parallel to the first optical path 301 and into a third color component that travels along a fourth optical path 304 parallel to the second optical path 302, and a mirror 33 to direct the third color component along the fourth optical path 304 to travel along a fifth optical path 305 that is parallel to the first optical path 301. The first, third and fifth optical paths 301, 303, 305 are transverse to a common vertical plane, and traverse a horizontal line on the common vertical plane.

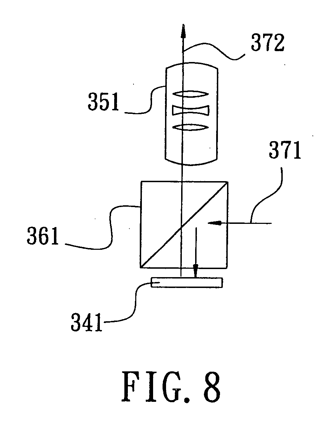

The first, second and third color components are generally primary color components, such as red, green and blue. The first color component along the first optical path 301 passes through a first focusing lens (not shown), a first polarization beam splitter 361 and a light-modulated first light valve 341 before being received by a first projection lens 351. Particularly, as shown in Figure 8, incident light with S-polarization 371 from the first focusing lens is directed by the first polarization beam splitter 361 to the first light valve 341. The first light valve 341, which is a reflective light valve, reflects light back to the first polarization beam splitter 361. The reflected light with P-polarization 372 is subsequently directed by the first polarization beam splitter 361 to the first projection lens 351.

The second color component along the third optical path 303 passes through a second focusing lens (not shown), a second polarization beam splitter 362 and a light-modulated second light valve 342 before being received by a second projection lens 352. The second focusing lens, the second polarization beam splitter 362 and the second light valve 342 operate in a manner similar to the first focusing lens, the first polarization beam splitter 361 and the first light valve 341.

The third color component along the fifth optical path 305 passes through a third focusing lens (not shown) , a third polarization beam splitter 363 and a light-modulated third light valve 343 before being received by a third projection lens 353. The third focusing lens, the third polarization beam splitter 363 and the third light valve 343 operate in a manner similar to the first focusing lens, the first polarization beam splitter 361 and the first light valve 341.

Like the previous embodiment, light from the first, second and third projection lenses 351, 352, 353 are projected on a display screen (not shown) for showing an image on the latter.

In the second preferred embodiment, the first optical path 301 has a path length (P1) equal to the sum of the path lengths (P2, P3) of the second and third optical paths 302, 303. The path length (P3) of the third optical path 303 is equal to the sum of the path lengths (P4, P5) of the fourth and fifth optical paths 304, 305. Thus, with reference to a common vertical plane upon which the first and second beam splitters 321, 322 and the mirror 33 are disposed, the first projection lens 351 is farther from the common vertical plane than the second projection lens 352, and the second projection lens 352 is farther from the common vertical plane than the third projection lens 353.

The path length for the first color component, measured from the first beam splitter 321 to the first focusing lens, is equal to P1. The path length for the second color component, measured from the first beam splitter 321 to the second focusing lens, is equal to P2+P3=P1. The path length for the third color component, measured from the first beam splitter 321 to the third focusing lens, is equal to P2+P4+P5=P2+P3=P1.

The different color components thus have uniform path lengths in the second preferred embodiment of this invention.

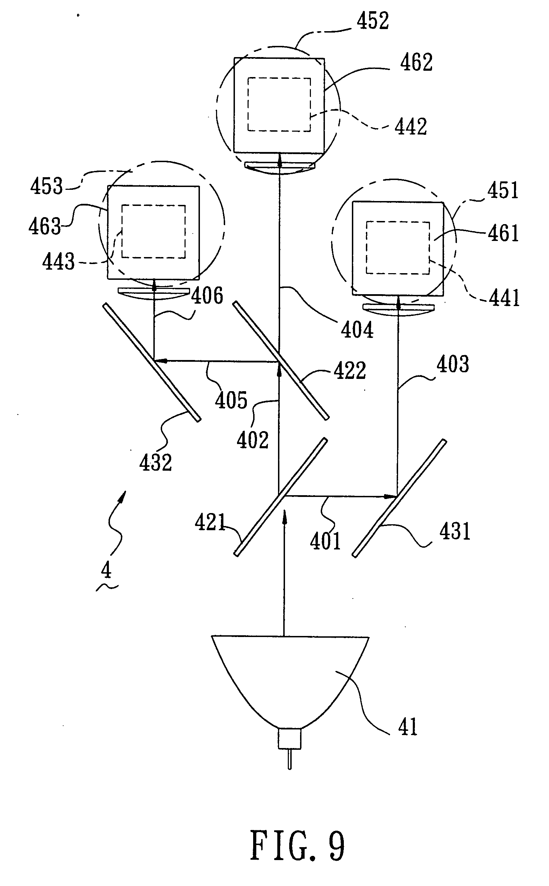

The third preferred embodiment of a triple-lens type projection display 4 according to this invention is shown in Figure 9. Unlike the second preferred embodiment, the projection display 4 comprises a source 41 for providing a white primary beam output, a first beam splitter 421 downstream of the source 41 to split the primary beam output from the source 41 into a first color component that travels along a first optical path 401 and a secondary beam output that travels along a second optical path 402 transverse to the first optical path 401, a first mirror 431 to direct the first color component along the first optical path 401 to travel along a third optical path 403 parallel to the second optical path 402, a second beam splitter 422 to split the secondary beam output along the second optical path 402 into a second color component that travels along a fourth optical path 404 parallel to the second optical path 402 and into a third color component that travels along a fifth optical path 405 transverse to the second optical path 402 and in a direction opposite to the first optical path 401, and a second mirror 432 to direct the third color component along the fifth optical path 405 to travel along a sixth optical path 406 that is parallel to the second optical path 402.

The first, second and third color components are generally primary color components, such as red, green and blue. The first color component along the third optical path 403 passes through a first focusing lens (not shown), a first polarization beam splitter 461 and a light-modulated first light valve 441 before being received by a first projection lens 451 in a manner similar to the second preferred embodiment.

The second color component along the fourth optical path 404 passes through a second focusing lens (not shown), a second polarization beam splitter 462 and a light-modulated second light valve 442 before being received by a second projection lens 452 in a manner similar to the second preferred embodiment.

The third color component along the sixth optical path 406 passes through a third focusing lens (not shown) , a third polarization beam splitter 463 and a light-modulated third light valve 443 before being received by a third projection lens 453 in a manner similar to the second preferred embodiment.

Like the previous embodiments, light from the first, second and third projection lenses 451, 452, 453 are projected on a display screen (not shown) for showing an image on the latter.

In the third preferred embodiment, the sum of the path lengths (P1, P3) of the first and third optical paths 401, 403 is equal to the sum of the path lengths (P2, P4) of the second and fourth optical paths 402, 404. The path length (P4) of the fourth optical path 404 is equal to the sum of the path lengths (P5, P6) of the fifth and sixth optical paths 405, 406. The first, second and third projection lenses 451, 452, 453 are thus arranged in a triangular formation with respect to a common horizontal plane.

The path length for the first color component, measured from the first beam splitter 421 to the first focusing lens, is equal to P1+P3=P2+P4. The path length for the second color component, measured from the first beam splitter 421 to the second focusing lens, is equal to P2+P4. The path length for the third color component, measured from the first beam splitter 421 to the third focusing lens, is equal to P2+P5+P6=P2+P4.

The different color components thus have uniform path lengths in the third preferred embodiment of this invention.

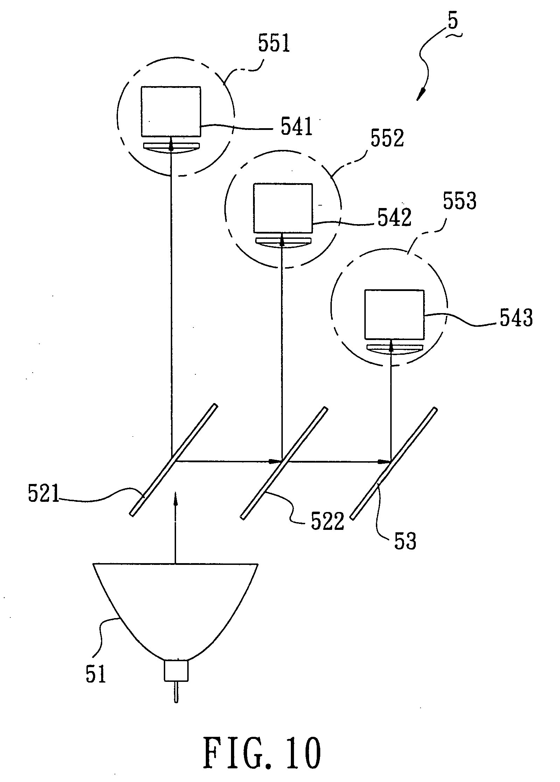

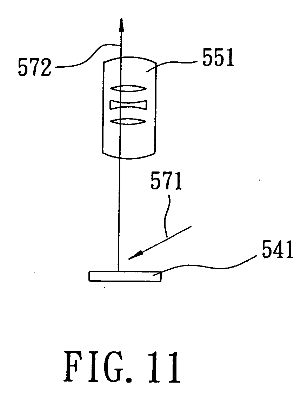

Figures 10 and 11 illustrate the fourth preferred embodiment of a triple-lens type projection display 5 according to this invention. The projection display 5 is based upon the second preferred embodiment, and includes a light source 51, first and second beam splitters 521, 522, and a mirror 53 which cooperate to form three color components in three different optical paths having uniform optical path lengths.

Unlike the second preferred embodiment, there is no polarization beam splitter between a light valve and a projection lens for each color component. Particularly, with reference to Figure 11, incident light 571 of the first color component impinges upon a light-modulated first light valve (DMD) 541, which is a digital reflective light valve, at an angle relative to the plane of the first light valve 541. Reflected light 572 from the first light valve 541, which is transverse to the plane of the first light valve 541, is provided directly to a first projection lens 551.

Like the first color component, the second color component is received by a second projection lens 552 via a digital reflective second light valve 542, whereas the third color component is received by a third projection lens 553 via a digital reflective third light valve 543.

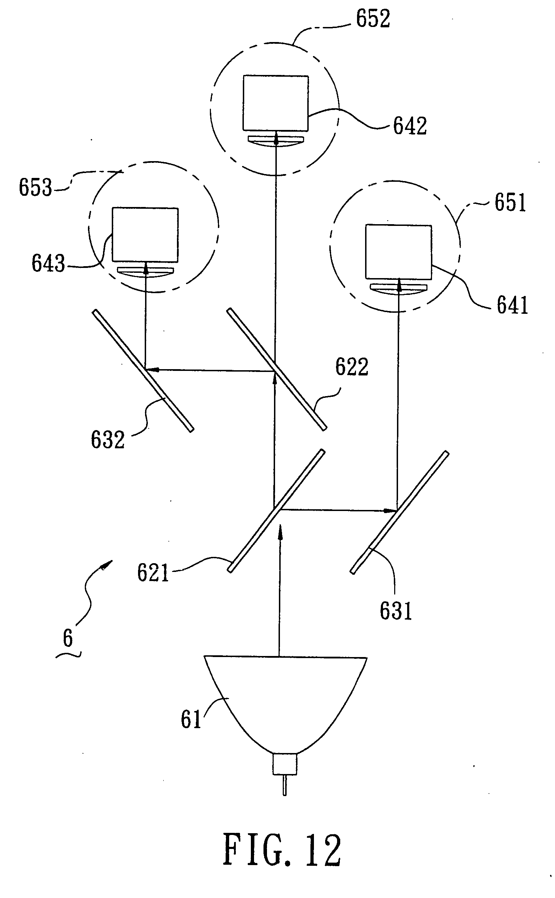

Figure 12 illustrates the fifth preferred embodiment of a triple-lens type projection display 6 according to this invention. The projection display 6 is based upon the third preferred embodiment, and includes a light source 61, first and second beam splitters 621, 622, and first and second mirrors 631, 632 which cooperate to form three color components in three different optical paths having uniform optical path lengths.

Unlike the third preferred embodiment, there is no polarization beam splitter between a light valve and a projection lens for each color component. Instead, the first color component is received by a first projection lens 651 via a digital reflective first light valve 641 in a manner similar to the fourth preferred embodiment. Likewise, the second color component is received by a second projection lens 652 via a digital reflective second light valve 642, whereas the third color component is received by a third projection lens 653 via a digital reflective third light valve 643.

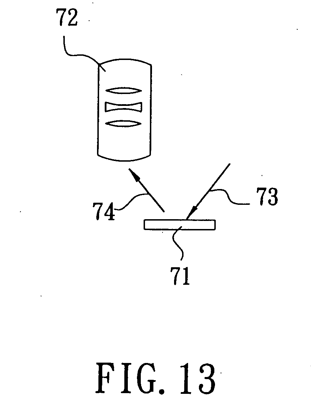

Figure 13 illustrates a light valve 71 and a projection lens 72 of the sixth preferred embodiment of a triple-lens type projection display according to this invention. Unlike the fourth and fifth preferred embodiments, the light valve 71 is an inclined reflective liquid crystal light valve. Incident light 73 impinges upon the light valve 71 at an angle relative to the plane of the latter. Reflected light 74 from the light valve 71, which also forms an angle with the plane of the latter, is provided directly to the projection lens 72. The projection lens 72 is thus staggered with respect to the light valve 71 to result in a flatter arrangement as compared to the light valve and projection lens set of the fourth and fifth preferred embodiments.

## Claims

1. A triple-lens type projection display (2) including
a source (21) for generating a white primary beam output,
a first beam splitter (251) for splitting the white primary beam output into a first color component and a secondary beam output,
a second beam splitter (252) for splitting the secondary beam output into a second color component and a third color component,
first, second and third light modulators (271, 272, 273) for modulating the first, second and third color components, respectively,
a first projection lens (281) for receiving the first color component from said first light modulator (271),
a second projection lens (282) for receiving the second color component from said second light modulator (272), and
a third projection lens (283) for receiving the third color component from said third light modulator (273),
**characterized in that** each of the first, second and third color components has a respective optical path length that is measured from said first beam splitter (251) to the respective one of said first, second and third light modulators (271, 272, 273), the optical path lengths of the first, second and third color components being equal.

2. The triple-lens type projection display (2) of Claim 1, further **characterized in that** said first, second and third light modulators (271, 272, 273) are disposed on a common vertical plane, and form three vertices of an imaginary triangle on the common vertical plane.

3. The triple-lens type projection display (2) of Claim 2, further **characterized in that** each of said first, second and third light modulators (271, 272, 273) is a transmissive liquid crystal light valve.

4. The triple-lens type projection display (2) of Claim 1, further **characterized in that**:
the first color component from said first beam splitter (251) travels along a first optical path (201);
the secondary beam output from said first beam splitter (251) travels along a second optical path (202) that is transverse to the first optical path (201) so as to be received by said second beam splitter (252);
a first mirror (261) directs the first color component along the first optical path (201) to travel along a third optical path (203) that is parallel to the second optical path (202) so as to be received by said first light modulator (271),
the second color component from said second beam splitter (252) travels along a fourth optical path (204) transverse to the second optical path (202) and in a direction opposite to the first optical path (201),
the third color component from said second beam splitter (252) travels along a fifth optical path (205) parallel to the second optical path (202),
a second mirror (262) directs the second color component along the fourth optical path (204) to travel along a sixth optical path (206) that is parallel to the second optical path (202) so as to be received by said second light modulator (272),
a third mirror (263) directs the third color component along the fifth optical path (205) to travel along a seventh optical path (207) that is transverse to the first and second optical paths (201, 202), and
a fourth mirror (264) directs the third color component along the seventh optical path (207) to travel along an eighth optical path (208) that is parallel to the fifth optical path (205) so as to be received by said third light modulator (273).

5. The triple-lens type projection display (2) of Claim 4, further **characterized in that** the first, fourth and seventh optical paths (201, 204, 207) have equal path lengths, the third optical path (203) having a path length equal to sum of path lengths of the second and sixth optical paths (202, 206), the path length of the sixth optical path (206) being equal to sum of path lengths of the fifth and eighth optical paths (205, 208).

6. The triple-lens type projection display (3) of Claim 1, further **characterized in that**:
the first color component from said first beam splitter (321) travels along a first optical path (301) so as to be received by said first light modulator (341),
the secondary beam output from said first beam splitter (321) travels along a second optical path (302) that is transverse to the first optical path (301) so as to be received by said second beam splitter (322),
the second color component from said second beam splitter (322) travels along a third optical path (303) that is parallel to the first optical path (301) so as to be received by said second light modulator (342),
the third color component from said second beam splitter (322) travels along a fourth optical path (304) that is parallel to the second optical path (302), and
a mirror (33) directs the third color component along the fourth optical path (304) to travel along a fifth optical path (305) that is parallel to the first optical path (301) so as to be received by said third light modulator (343).

7. The triple-lens type projection display (3) of Claim 6, further **characterized in that** said first and second beam splitters (321, 322) and said mirror (33) are disposed on a common vertical plane, said first light modulator (341) being farther from the common vertical plane than said second light modulator (342), said second light modulator (342) being farther from the common vertical plane than said third light modulator (343).

8. The triple-lens type projection display (3) of Claim 6, further **characterized in that** the first optical path (301) has a path length equal to sum of path lengths of the second and third optical paths (302, 303), and the path length of the third optical path (303) is equal to sum of path lengths of the fourth and fifth optical paths (304, 305).

9. The triple-lens type projection display (3) of Claim 6, **characterized in that** each of said first, second and third light modulators (341, 342, 343) is a reflective light valve.

10. The triple-lens type projection display (3) of Claim 9, **characterized by** first, second and third polarization beam splitters (361, 362, 363) disposed between a respective one of said first, second and third light modulators (341, 342, 343) and a respective one of said first, second and third projection lenses (351, 352, 353), each of said polarization beam splitters (361, 362, 363) directing a respective one of the color components to the respective one of said light modulators (341, 342, 343), and further directing light reflected by the respective one of said light modulators (341, 342, 343) to the respective one of said projection lenses (351, 352, 353).

11. The triple-lens type projection display (5) of Claim 6, further **characterized in that** each of said first, second and third light modulators (541, 542, 543) is a reflective light valve that reflects the respective one of the color components directly to the respective one of said projection lenses (551, 552, 553).

12. The triple-lens type projection display (4) of Claim 1, further **characterized in that**:
the first color component from said first beam splitter (421) travels along a first optical path (401);
the secondary beam output from said first beam splitter (421) travels along a second optical path (402) that is transverse to the first optical path (401) so as to be received by said second beam splitter (422);
a first mirror (431) directs the first color component along the first optical path (401) to travel along a third optical path (403) that is parallel to the second optical path (402) so as to be received by said first light modulator (441),
the second color component from said second beam splitter (422) travels along a fourth optical path (404) that is parallel to the second optical path (402) so as to be received by said second light modulator (442),
the third color component from said second beam splitter (422) travels along a fifth optical path (405) transverse to the second optical path (402) and in a direction opposite to the first optical path (401), and
a second mirror (432) directs the third color component along the fifth optical path (405) to travel along a sixth optical path (406) that is parallel to the second optical path (402) so as to be received by said third light modulator (443).

13. The triple-lens type projection display (4) of Claim 12, further **characterized in that** sum of path lengths of the first and third optical paths (401, 403) is equal to sum of path lengths of the second and fourth optical paths (402, 404), and the path length of the fourth optical path (404) is equal to sum of path lengths of the fifth and sixth optical paths (405, 406).

14. The triple-lens type projection display (4) of Claim 12, further **characterized in that** each of said first, second and third light modulators (441, 442, 443) is a reflective light valve.

15. The triple-lens type projection display (4) of Claim 14, **characterized by** first, second and third polarization beam splitters (461, 462, 463) disposed between a respective one of said first, second and third light modulators (441, 442, 443) and a respective one of said first, second and third projection lenses (451, 452, 453), each of said polarization beam splitters (461, 462, 463) directing a respective one of the color components to the respective one of said light modulators (441, 442, 443), and further directing light reflected by the respective one of said light modulators (441, 442, 443) to the respective one of said projection lenses (451, 452, 453).

16. The triple-lens type projection display (6) of Claim 12, further **characterized in that** each of said first, second and third light modulators (641, 642, 643) is a reflective light valve that reflects the respective one of the color components directly to the respective one of said projection lenses (651, 652, 653).
